# FASCICULE DE BREVET EUROPEEN

(11) **EP 3 444 416 B1**
(45) Date de publication et mention de la délivrance du brevet: **06.04.2022**
(21) Numéro de dépôt: 17306070.8
(22) Date de dépôt: 16.08.2017
(51) Int. Cl.: E04H 3/08, E04H 1/00, A61G 10/00, H02G 3/38

(54) **ENSEMBLE MODULAIRE POUR L'AMENAGEMENT D'UNE SALLE D'OPERATION**
MODULARE ANORDNUNG FÜR DIE AUSSTATTUNG EINES OPERATIONSSAALS
MODULAR ASSEMBLY FOR THE ARRANGEMENT OF AN OPERATING ROOM

(43) Date de publication de la demande: 20.02.2019
(73) Titulaire: LSB La Salle Blanche, 84400 Apt (FR)
(72) Inventeur: QUINSON, Fabrice, 84250 LE THOR (FR)
(74) Mandataire: Bugnion Genève

(56) Documents cités:
- DE-A1-102007 033 353
- DE-U1-202012 003 176
- US-A- 5 953 871
- US-B1- 9 010 031
- US-B1- 9 373 943

## Description

### DOMAINE TECHNIQUE DE L'INVENTION

L'invention concerne un ensemble modulaire pour l'équipement d'une salle d'opération en vue de son utilisation à toute fin médicale, chirurgicale ou thérapeutique, où les éléments constituant les différents systèmes fonctionnels de la salle d'opération sont compris dans les modules de l'ensemble modulaire.

### ETAT DE LA TECHNIQUE ANTERIEURE

Les hôpitaux comportent des locaux tels que les salles d'opérations, les salles d'anesthésie, les unités de soins intensifs, des salles de radiologie ou d'imagerie médicale. Ces locaux doivent se conformer aux réglementations en vigueur concernant, entre autres, le traitement de l'air, les matériaux utilisés ou la nature et la disposition des dispositifs médicaux. Ils sont donc généralement conçus en amont de la construction de l'hôpital. Considérant les contraintes spécifiques imposées à ces aménagements, adapter un local n'étant pas conçu à l'origine pour des activités thérapeutiques ou chirurgicales nécessite l'intervention de plusieurs corps de métiers spécialisés, de manière à le rendre conforme aux exigences réglementaires liées aux activités médicales, chirurgicales et/ou thérapeutiques. Les éléments et les savoir-faire nécessaires pour l'aménagement d'un tel local sont rares. De plus, les corps de métiers spécialisés doivent être coordonnés, notamment en ce qui concerne les éléments de plaquage, les éléments de connectique électrique ou électronique, les éléments de distribution, d'extraction et de traitement de fluides, qu'ils soient gazeux ou liquide, comprenant les conduites et leurs raccordements. Le processus d'adaptation est donc généralement long et engendre des coûts d'aménagement significatifs.

La problématique est identique dans le cas de la construction d'un tel local, indépendant de bâtiments préexistants. L'installation et la mise en fonctionnement des différents systèmes fonctionnels du local requièrent la coordination de corps de métiers spécifiques sur le lieu de l'installation.

De surcroît, certains aspects règlementaires peuvent nécessiter un ou plusieurs dispositifs de secours, de manière à pallier aux éventuels disfonctionnements. En l'occurrence, les salles d'opérations sont équipées de bras articulés permettant d'orienter les différents flux de fluides comme de l'air ou l'oxygène, ou le protoxyde d'azote. Il est alors crucial de prévoir un système alternatif de dispense de ces fluides, en complément des systèmes déjà installés. En cas de défaillance du système principal, les systèmes fonctionnels alternatifs peuvent prendre le relai. Eventuellement, les systèmes alternatifs peuvent également être utilisés de manière concomitante et complémentaire avec le système principal.

Des constructions modulaires sont connues pour permettre la construction ou l'aménagement de tels locaux à finalité médicale, thérapeutique ou chirurgicale. Ces constructions modulaires nécessitent cependant une étape, après leur installation, de mise en conformité ou d'aménagements spécifiques qui nécessitent l'intervention de corps de métiers spécialisés. Il y a donc encore matière à améliorer la conception de tels constructions afin de limiter ou d'exclure l'intervention de compétences de spécialités sur le lieu du local.

De telles constructions modulaires sont par exemple connues de DE 10 2007 033353 A1, US 9 373 943 B1, US 5 953 871 A, US 9 010 031 B1 ou DE 20 2012 003176 U1.

### EXPOSÉ DE L'INVENTION

L'invention vise à pallier à ces inconvénients. En particulier, l'invention a pour but de fournir une solution permettant l'installation et l'aménagement d'un local utilisable notamment à des fins médicales, chirurgicales ou thérapeutiques, de manière à éviter l'intervention de corps de métiers spécialisés après sa mise en place. Le local est de préférence une salle d'opération et doit obéir aux normes relatives à ce domaine. Par les termes « salle d'opération » il doit être compris tout local utilisé à des fins thérapeutiques, médicales ou chirurgicales, et devant obéir aux normes relatives au domaine médical. Cela inclut les salles de soins intensifs, les salles d'anesthésie, de radiologie, d'analyse ou d'intervention médicale, ainsi que le bloc opératoire en tant que tel. De manière préférentielle, une salle d'opération désigne une salle équipée d'un bras mécanique permettant de distribuer des fluides gazeux ou liquides lors des opérations chirurgicales.

La présente invention permet de réduire les coûts et la durée des travaux de reconversion ou d'installation d'un tel local. L'invention permet en l'occurrence de limiter le nombre d'intervenants spécialisés sur le site d'emplacement de la salle d'opération par rapport à la pratique courante. L'invention permet en outre de proposer une solution à la carte, en fonction des besoins spécifiques liés à la nature du local à reconvertir.

L'invention met de surcroît à disposition des systèmes fonctionnels capables de pallier aux éventuelles défaillances des systèmes principaux.

Ces buts sont atteints par un ensemble modulaire équipé de plusieurs systèmes fonctionnels dont au moins un système électrique, un système électronique, un système informatique, un système aéraulique et un système fluidique.

L'ensemble modulaire comprend plusieurs modules, qui sont préfabriqués dans une unité de production et assemblés au niveau de la salle d'opération à équiper. Chacun des modules est pré-équipé, lors de sa fabrication en atelier, de plusieurs sous-systèmes tels qu'un sous-système électrique, un sous-système électronique, un sous-système informatique, un sous-système aéraulique et un sous-système fluidique. Chacun des sous-systèmes contenus dans les modules représente une partie du système fonctionnel correspondant. En outre les sous-systèmes d'un même système fonctionnel sont appariés lors de l'assemblage des modules au niveau de la salle d'opération de manière à constituer l'intégralité du système fonctionnel correspondant. Selon l'invention, chaque sous-système d'un module contient un ou plusieurs moyens de connexion correspondants, permettant de connecter deux sous-systèmes correspondants de modules contigus.

Dans un tel ensemble modulaire, les modules peuvent être sous la forme de panneaux muraux, constitués de deux faces opposées et parallèles séparées par un espace. Il est alors possible d'inclure dans cet espace tout ou partie des sous-systèmes fonctionnels. Les panneaux muraux sont conçus de manière à pouvoir s'assembler les uns aux autres. Des modules peuvent se présenter sous la forme d'éléments d'angle. Les éléments d'angle peuvent se combiner aux panneaux muraux pour constituer un espace clos formant le bloc opératoire. Un élément d'angle peut par exemple contenir deux surfaces orthogonales l'une à l'autre. De préférence, un élément d'angle comprends au moins trois surfaces délimitant un volume, pouvant servir d'espace technique, dont deux des surfaces sont perpendiculaires l'une à l'autre. Un élément d'angle peut être muni d'une ou plusieurs grilles, fixées ou intégrées à l'une ou plusieurs de ses surfaces. L'élément d'angle peut optionnellement contenir un ou plusieurs équipements sélectionnés parmi au moins un moto-ventilateur, et au moins un filtre, ou être adapté pour recevoir ces équipements. L'ensemble modulaire comprend un nombre variable de panneaux muraux, et d'éléments d'angle, où les panneaux muraux et les éléments d'angle peuvent contenir chacun un ou plusieurs sous-systèmes, ou aucun sous-système. Cela représente l'avantage de pouvoir fabriquer à la demande chacun des panneaux et des éléments d'angle d'un ensemble modulaire, avant de les assembler pour construire le bloc opératoire. Chacun des panneaux muraux et des éléments d'angle peut être fabriqué en atelier, ou dans une unité de production, au besoin dans un environnement dépoussiéré et/ou aseptisé, et pré-équipé en fonction des besoins, avant son assemblage au niveau du bloc opératoire.

Les panneaux muraux et les éléments d'angle de l'ensemble modulaire de la présente invention sont constitués de matériaux permettant de satisfaire les normes d'hygiène sanitaire relatives aux équipements et environnement médicaux. Ils peuvent ainsi comprendre des polymères rigides, des polymères souples, des résines, des métaux. Les panneaux muraux et les éléments d'angle sont conçus de manière à éviter toute aspérité externe où les salissures et les impuretés seraient susceptibles de s'accumuler. Ainsi, les équipements intégrés à chacun des panneaux muraux et des éléments d'angle sont disposés de manière à limiter les reliefs par rapport à la surface du panneau ou de l'élément d'angle. Les équipements intégrés à la surface interne des panneaux muraux et éléments d'angle s'inscrivent donc dans l'alignement de la surface du panneau mural ou de l'élément d'angle correspondant, et ne présentent pas de protubérances, de rebords de jointure, ou toute autre aspérité.

Dans un tel ensemble modulaire, le sous-système électrique d'un module peut contenir un ou plusieurs moyens de connexion électriques permettant de connecter deux sous-systèmes électriques de modules contigus. De façon similaire, le sous-système électronique d'un module peut contenir un ou plusieurs moyens de connexion électroniques permettant de connecter deux sous-systèmes électroniques de modules contigus. De même, le sous-système informatique d'un module peut contenir un ou plusieurs moyens de connexion électroniques permettant de connecter deux sous-systèmes informatiques de modules contigus. Le sous-ensemble aéraulique d'un module peut contenir un ou plusieurs moyens de connexion aéraulique permettant de connecter deux sous-systèmes aérauliques de modules contigus. Le sous-système fluidique d'un module peut contenir un ou plusieurs moyens de connexion fluidique permettant de connecter deux sous-systèmes fluidiques de modules contigus.

Chacun des sous-systèmes électrique, électronique, informatique, aéraulique et fluidique d'un module peut en outre comprendre un ou plusieurs moyens de branchement spécifiques. De tels moyens de branchement peuvent être des moyens de branchement électrique, électronique, informatique, aéraulique ou fluidique en fonction du sous-système considéré. Ces moyens de branchements sont sur une face apparente du module lorsqu'il est en position. L'usager peut alors connecter sur l'un ou l'autre des systèmes fonctionnels un ou plusieurs appareils électriques, électroniques, informatiques, aérauliques ou fluidiques.

Le sous-système électrique d'un module peut contenir un ou plusieurs dispositifs électriques tels que des appareils électriques, une ou plusieurs alimentations électriques, des conducteurs électriques, des moyens d'éclairage et des moyens de connexion électrique permettant de relier les différents sous-systèmes électriques. Le sous-système électronique d'un module peut contenir un ou plusieurs dispositifs électroniques tels que des capteurs, incluant des capteurs de mouvement, des processeurs ou microprocesseur, des dispositifs d'alerte sonores ou visuels, et des moyens de connexion électronique pour relier les différents sous-systèmes électroniques. Le sous-système informatique d'un module peut contenir un ou plusieurs dispositifs informatiques tels que des interfaces de programmation, des interfaces de contrôle et des afficheurs. Les différents sous-systèmes informatiques peuvent être connectés les uns aux autres par des moyens de connections électronique. Le sous-système aéraulique d'un module peut contenir un ou plusieurs dispositifs aérauliques tels que des gaines, des moyens de connexion aéraulique, des filtres, des éléments motorisés, et des grilles de protection. Le sous-système fluidique d'un module peut contenir un ou plusieurs dispositifs fluidiques tels que des conduites, des moyens de connexion fluidique, des dispositifs motorisés, et des éléments de thermorégulation.

Les modules de l'ensemble modulaire peuvent en outre comprendre une ou plusieurs ouvertures. Les ouvertures peuvent notamment être des moyens d'accès techniques tels que des trappes de visite, ou des vitrages fixes permettant l'entrée de la lumière naturelle dans la salle d'opération. De telles ouvertures peuvent inclure des fenêtres, des portes et tout autre dispositif pouvant être ouvert et fermé. Les modules de l'ensemble peuvent en outre comprendre des accessoires non directement liés à l'un des systèmes fonctionnels décrits plus hauts, tels que des équipements domotiques, des supports ou suspentes, des rangements, des présentoirs et tout autre accessoire utile à l'activité de l'usager.

Dans le cadre de l'activité médicale, les modules doivent obéir aux règlementations sanitaires adéquates. Les panneaux muraux et éléments d'angle sont donc de préférence sans aspérité, pour éviter l'accumulation d'agents contaminants, éventuellement revêtus d'une couche protectrice conforme aux exigences réglementaires. Une telle couche protectrice peut être une surface métallique, comme l'aluminium, ou un revêtement de polymère, dont le nettoyage est facilité. Le plomb peut également être utilisé comme protection contre les rayonnements ionisants. De manière à éliminer les charges électrostatiques, des dissipateurs peuvent en outre être intégrés aux modules.

La présente invention inclut un procédé d'équipement d'une salle d'opération comprenant plusieurs systèmes fonctionnels dont au moins un système électrique, un système électronique, un système informatique, un système aéraulique, et/ou un système fluidique. Le procédé d'équipement comprenant les étapes de :
a) Disposer, au niveau de la salle d'opération, un premier module préfabriqué dans une unité de production. Ce premier module comprend plusieurs sous-systèmes tels que les sous-systèmes électrique, électronique, informatique, aéraulique et fluidique décrits plus hauts.
b) Disposer un second module préfabriqué dans une unité de production, contigu au premier module. Ce second module comprend plusieurs sous-systèmes tels que les sous-systèmes électrique, électronique, informatique, aéraulique et fluidique décrit plus haut. Le second module est disposé au contact du premier module de manière à ce que les sous-systèmes du premier module ceux du second module soient connectés l'un à l'autre, chaque sous-système d'un module contient un ou plusieurs moyens de connexion correspondants permettant de connecter deux sous-systèmes correspondants de modules contigus.
c) Réitérer l'étape b) de façon itérative jusqu'à la disposition du dernier module, de manière à ce que les sous-systèmes de tous les modules soient connectés les uns aux autres pour former l'intégralité des systèmes fonctionnels de la salle d'opération.

Selon ce procédé, il n'est pas besoin de faire intervenir de corps de métiers de spécialité pour la mise en fonction de la salle d'opération. Ceci est rendu possible grâce au fait qu'une étape préalable de conception et de fabrication dans une unité de production permet d'intégrer aux modules tous les éléments techniques nécessaires au fonctionnement des systèmes fonctionnels de la salle d'opération. Des moyens de connexion entre sous-systèmes sont intégrés aux modules lors de leur conception, de manière à faciliter la mise en place des systèmes fonctionnels. De manière optionnelle, le procédé peut comprendre une étape intermédiaire de connexion des sous-systèmes de modules contigus grâce aux moyens de connexion électrique, électronique, informatique, aéraulique et fluidique décrits plus haut. Cette étape de connexion peut faire intervenir des éléments de connexion additionnels, utilisés au moment de l'installation du bloc opératoire.

Lors de l'étape préalable de conception des modules, les éléments techniques nécessaires au fonctionnement des systèmes électrique, électronique, informatique, aéraulique et fluidique sont répartis sur chacun des modules de manière judicieuse, de manière à optimiser l'agencement des sous-systèmes correspondants et leur interconnexion.

### BR̂VE DESCRIPTION DES FIGURES

D'autres caractéristiques et avantages de l'invention ressortiront à la lecture de la description qui suit, en référence aux figures annexées, qui illustrent :

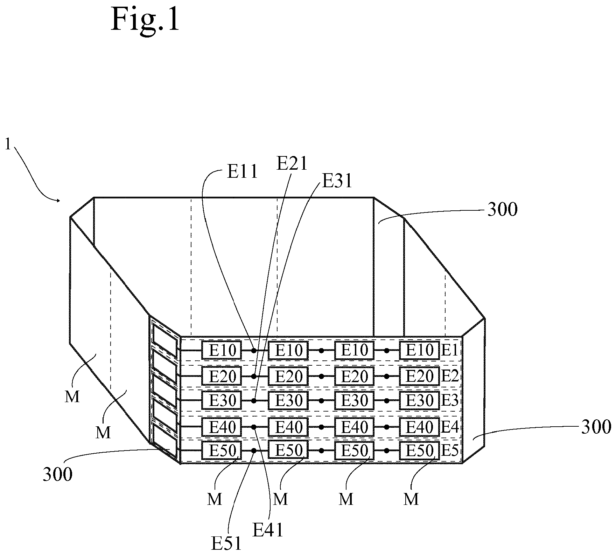

- Figure 1 : vue schématique de l'ensemble modulaire montrant la répartition des sous-systèmes sur quelques modules;
- Figure 2 : vue de face d'un panneau mural faisant partie d'un ensemble modulaire selon l'invention ;
- Figures 3A, 3B : vue de face et vue de dessus d'un élément d'angle faisant partie d'un ensemble modulaire selon l'invention ;
- Figure 4: vue de face d'un panneau mural faisant partie de l'ensemble modulaire selon l'invention ;
- Figures 5A et5B, vue de face et vue de dessus d'un autre panneau mural faisant partie d'un ensemble modulaire selon l'invention ;
- Figures 6A, 6B, 6C, 6D, 6E : exemples de systèmes électrique, électronique, informatique, aéraulique et fluidique répartis sur plusieurs modules selon l'invention ;
- La figure 7 : exemple d'agencement d'un bloc opératoire comprenant l'ensemble modulaire selon l'invention.

### DESCRIPTION DÉTAILLÉE DE L'INVENTION

L'ensemble modulaire **1** selon la présente invention permet d'équiper une salle d'opération avec un ou plusieurs systèmes fonctionnels. La nature et le nombre de systèmes fonctionnels d'une telle salle d'opération dépendent de l'utilisation de la salle d'opération. En particulier, un système fonctionnel peut désigner un système électrique **E1**, un système électronique **E2**, un système informatique **E3**, un système aéraulique **E4**, ou un système fluidique **E5**.

On entend par système électrique **E1** un ensemble fonctionnel comprenant des appareils électriques **E12** ou permettant leur alimentation électrique. De tels appareils électriques **E12** sont en particulier des dispositifs motorisés **E120** tels que ventilateur, compresseur ou élément domotiques, des dispositifs d'éclairage **E121** tels que des ampoules, des diodes, des néons, ou des négatoscopes, ou des dispositifs thermostatiques **E122** tels que ballon d'eau chaude ou résistance électrique. Le système électrique **E1** comprend au moins une alimentation électrique **E13** et des conducteurs électriques **E14**. Le système électrique peut en outre comprendre un ou plusieurs moyens de branchement électrique **E15**. Un moyen de branchement électrique **E15** peut notamment se présenter sous la forme d'une prise de courant électrique, permettant à l'utilisateur de brancher un appareil électrique **E12** sur le système électrique **E1.** Le système électrique **E1** selon la présente invention peut également être utilisé pour alimenter en électricité des systèmes de nature différente, tels qu'un système électronique **E2**, un système informatique **E3**, un système aéraulique **E4**, ou un système fluidique **E5.** Les différents éléments du système électrique **E1** sont connectés entre eux par des moyens de connexion électrique **E16.** Le système électrique **E1** est subdivisé en plusieurs sous-systèmes électriques **E10,** répartis dans plusieurs modules **M** constituant l'ensemble modulaire **1.** Les sous-systèmes électriques **E10** sont connectés l'un à l'autre par des dispositifs de connexion électrique **E11.** Les sous-systèmes électriques **E10** contiennent un ou plusieurs des éléments constituant le système électrique **E1**, sélectionnés parmi les appareils électriques **E12**, l'alimentation électrique **E13**, les conducteurs électriques **E14**, les moyens de branchement électriques **E15**, les dispositifs motorisés **E120**, les dispositifs d'éclairage **E121**, les dispositifs thermostatiques **E122** et les moyens de connexion électriques **E16**.

Un système électronique **E2** selon la présente invention s'entend comme un ensemble fonctionnel permettant l'enregistrement, la détection et le traitement de l'information liée à des paramètres variés, tels que pression, température, hygrométrie, et autres. Le système électronique **E2** comprend notamment des capteurs **E22** destinés à détecter certains paramètres. Les capteurs incluent de préférence les capteurs de mouvement utilisés comme interrupteurs intelligents. De tels capteurs sont disposés de préférence sur les surfaces visibles des modules et permettent aux usagers de la salle d'opération de commander différents équipements en passant la mans devant le capteur de présence. De tels capteurs permettent notamment l'ouverture des portes, l'interphonie, l'activation et la desactivation de systèmes radio ou vidéo tels que lecteur DVD, ou de chronomètres. Le système électronique **F2** comprend en outre des processeurs **E23** permettant d'analyser les données et de transmettre les informations, et d'éventuels dispositifs d'alerte **E24** sonores ou lumineux destinés à avertir l'utilisateur. Le système électronique **E2** comporte également tout moyen de connexion électronique **E25** nécessaire à son fonctionnement, ainsi que les conducteurs électroniques **E26**. Il peut en outre comprendre des moyens de branchement électroniques **E27** permettant à l'utilisateur de brancher un appareil sur le système électronique **E2**. De tels moyens de branchement électroniques comprennent notamment les connecteurs de type USB, RJ45, Jack, les connecteurs Ethernet, les connecteurs internet etc. Il est précisé que certains éléments électroniques du système électronique **E2** peuvent être inclus ou connectés à d'autres systèmes de la présente invention. Certains éléments électroniques **E2** peuvent notamment être intégrés ou connectés au système informatique **E3**. Certains éléments du système électronique **E2** peuvent en plus interagir avec l'un ou plusieurs des systèmes aéraulique **E4** et fluidique **E5**. Les éléments électroniques sont de préférence alimentés en électricité par le système électrique **E1**. Le système électronique **E2** est subdivisé en plusieurs sous-systèmes électroniques **E20**, répartis dans plusieurs modules **M** constituant l'ensemble modulaire **1**. Les sous-systèmes électroniques **E20** sont connectés l'un à l'autre par des dispositifs de connexion électroniques **E21**. Les sous-systèmes électroniques **E20** contiennent un ou plusieurs des éléments constituant le système électronique **E2**, sélectionnés parmi les capteurs **E22**, les processeurs **E23**, les éventuels dispositifs d'alerte **E24**, les moyens de connexion électroniques **E25**, les conducteurs électroniques **E26** et les moyens de branchement électroniques **E27**.

Un système informatique **E3** selon la présente invention s'entend comme un ensemble fonctionnel permettant à l'utilisateur de contrôler ou piloter l'appareillage de la salle d'opération. Le système informatique permet notamment de gérer la température de la salle d'opération et des fluides qui y sont dispensé, ainsi que les autres propriétés de ces fluides. En particulier, la pression, l'humidité, la vitesse de flux, et les seuils de déclanchement des alarmes liées à un quelconque disfonctionnement. Les valeurs de ces différents paramètres sont recueillies par des capteurs du système électronique. Le système informatique **E3** permet en outre de piloter différents dispositifs tels que des éléments domotiques, comprenant les stores associés aux éventuels vitrages fixes et portes, l'interphonie, et la sono. Le système informatique **E3** comprend notamment un ou plusieurs des dispositifs informatiques usuels sélectionnés parmi les interfaces de programmation **E321** et les interfaces de contrôle **E322.** Ces dispositifs informatiques incluent notamment les ordinateurs **E323,** comprenant éventuellement clavier et/ou écran d'affichage, qui peuvent être tactiles, des afficheurs programmables **E324** ou non programmables, pouvant par exemple afficher des valeurs de certains paramètres a l'attention d'un utilisateur. Ces paramètres peuvent être de nature variée en fonction de l'utilisation de la salle d'opération. Des valeurs telles que l'hygrométrie, la qualité de l'air ambiant ou celle de certains fluides, la température, la pression ambiante ou celle de certains fluides, sont des exemples non exhaustifs. Les dispositifs informatiques incluent également les moniteurs de contrôle **403** et tout dispositif vidéo, audio ou audiovisuel. Les dispositifs informatiques du système informatique **E3** peuvent être reliés l'un à l'autre par les moyens de connexion électroniques **E25** ou par d'autres moyens de connexions informatiques. Le système informatique **E3** est subdivisé en plusieurs sous-systèmes informatiques **E30**, répartis dans plusieurs modules **M** constituant l'ensemble modulaire 1. Les sous-systèmes informatiques **E30** sont connectés l'un à l'autre par des dispositifs de connexion informatiques **E31**, pouvant être des moyens de connexion électroniques **E25**. Les sous-systèmes informatiques **E30** contiennent un ou plusieurs des éléments constituant le système électronique **E3**, sélectionnés parmi les dispositifs informatiques énumérés ci-dessus. Le système informatique E3 peut être indépendant ou être connecté à un réseau informatique permettant d'échanger de l'information avec l'extérieur de la salle d'opération.

Un système aéraulique **E4** selon la présente invention s'entend comme un ensemble fonctionnel permettant la distribution, le contrôle et le traitement de fluides gazeux tel que l'air ambiant. Le système aéraulique **E4** comprend notamment des gaines **E42**, également dénommées conduites, permettant d'acheminer les flux de fluide gazeux, des connexions aéraulique **E43**, des filtres **E44** permettant de dépoussiérer les fluides gazeux, et éventuellement un ou plusieurs éléments motorisés **E45** permettant d'orienter et/ou d'accélérer les flux de fluide gazeux à travers les conduites **E42.** Le système aéraulique **E4** peut en outre contenir des grilles de protection **E46**, des éléments de thermorégulation **E48**, et tout autre élément nécessaire aux activités de la salle d'opération. Des moyens de branchement aérauliques **E47** peuvent également faire partie des sous-systèmes aérauliques **E40**. Lorsque le système aéraulique est dédié au traitement de l'air ambiant, les ouvertures protégées par les grilles de protection **E46** peuvent être considérées comme un moyen de branchement aéraulique **E47**. De préférence, l'air est soufflé dans la salle d'opération par le plafond, muni de filtres, et évacué vers l'extérieur de la salle d'opération par des gaines de reprise disposées dans les éléments d'angle. Le système aéraulique peut cependant être dédié aux gaz tels que l'oxygène, le protoxyde d'azote, ou autre gaz non ambiants. Dans ce cas des moyens de branchement aérauliques **E47** spécifiques peuvent être prévus. Le gaz acheminé dans le système aéraulique **E40** peut être maintenu à une pression comprise entre 2 et 12 bars, ou entre 3 et 10 bars, ou entre 4 et 8 bars.

Le système aéraulique **E4** est de préférence alimenté en électricité par le système électrique **E1**. Il peut de plus être programmé et contrôlé par le système électronique **E2**. A cet effet, des capteurs **E22** du système électronique **E2** peuvent être disposés ou connectés au système aéraulique **E4** de manière à déterminer les paramètres du fluide gazeux, tels que sa température, sa pression, son hygrométrie ou autre. Des capteurs spécifiques de pression, de température, d'humidité sont alors utilisés. Le système aéraulique **E4** peut en outre être piloté manuellement via le système informatique **E3**. Le système Aéraulique **E4** est subdivisé en plusieurs sous-systèmes aérauliques **E40**, répartis dans plusieurs modules **M** constituant l'ensemble modulaire **1.** Les sous-systèmes aérauliques **E40** sont connectés l'un à l'autre par des dispositifs de connexion aérauliques **E41.** Les sous-systèmes aéraulique **E40** contiennent un ou plusieurs des éléments constituant le système aérauliques **E4,** sélectionnés parmi les gaines **E42,** les connexions aérauliques **E43,** les filtres **E44,** les éléments motorisés **E45,** les grilles de protection **E46** et les moyens de branchement aérauliques **E47.**

Un système fluidique **E5** selon la présente invention désigne un ensemble fonctionnel permettant la distribution, le contrôle et le traitement de fluides liquides. Les fluides liquides comprennent l'eau et tout autre liquide nécessaire aux activités de la salle d'opération. Les gaz liquéfiés tels que l'azote liquide, le protoxyde d'azote ou l'oxygène liquide sont également des fluides liquides. Le système fluidique **E5** comprend à cet effet des conduites **E52** adaptées à l'acheminement des fluides considérés, des éléments de connexion fluidique **E53**, et éventuellement un ou plusieurs dispositifs motorisés **E54** permettant l'acheminement des fluides à travers les conduites **E52**. Le système fluidique peut comprendre en outre des éléments de thermorégulation **E55**, des moyens de branchement fluidique **E57** permettant à l'utilisateur de connecter un appareil utilisant un fluide. Chacun des moyens de branchement **E57** peut être dédié à un fluide spécifique, de manière à distribuer un fluide particulier. Les moyens de branchements fluidique sont sous forme de prises accessibles par l'utilisateur. Les prises peuvent notamment être de type O₂, N₂O, CO₂, AM4, AM8, ou VAC. Dans un mode de fonctionnement avantageux, les moyens de branchement **E57** sont constitués de telle manière que le fluide ne peut être distribué que si un élément de distribution ou d'extraction y est connecté. Lorsqu'un moyen de branchement **E57** est prévu pour l'extraction de fluides, il est de préférence de type SEGA (Système d'Evacuation des Gaz Anesthésiques). Ce dispositif est alors muni d'un système venturi intégré qui permet de limiter le taux de fuite. Le système fluidique **E5** est, si besoin, alimenté en électricité par le système électrique **E1**. Il peut en outre être contrôlé par le système électronique **E2.** Des capteurs **E22** du système électronique **E2** peuvent notamment être disposés sur le système fluidique **E5** de manière à détecter les paramètres liés aux fluides acheminés, tels que température, pression, pureté. A cette fin des capteurs spécifiques de pression de température et de qualité peuvent être utilisés. Le système fluidique **E5** peut de plus être piloté par l'utilisateur grâce au système informatique **E3**. Le système fluidique **E5** est subdivisé en plusieurs sous-systèmes fluidiques **E50**, répartis dans plusieurs modules **M** constituant l'ensemble modulaire 1. Les sous-systèmes fluidiques **E50** sont connectés l'un à l'autre par des dispositifs de connexion fluidique **E51**. Les sous-systèmes fluidiques **E50** contiennent un ou plusieurs des éléments constituant le système fluidique **E5**, sélectionnés parmi les conduites **E52**, les éléments de connexion fluidiques **E53**, les éventuels dispositifs motorisés **E54**, les éléments de thermorégulation **E55**, et les moyens de branchement fluidiques **E57**.

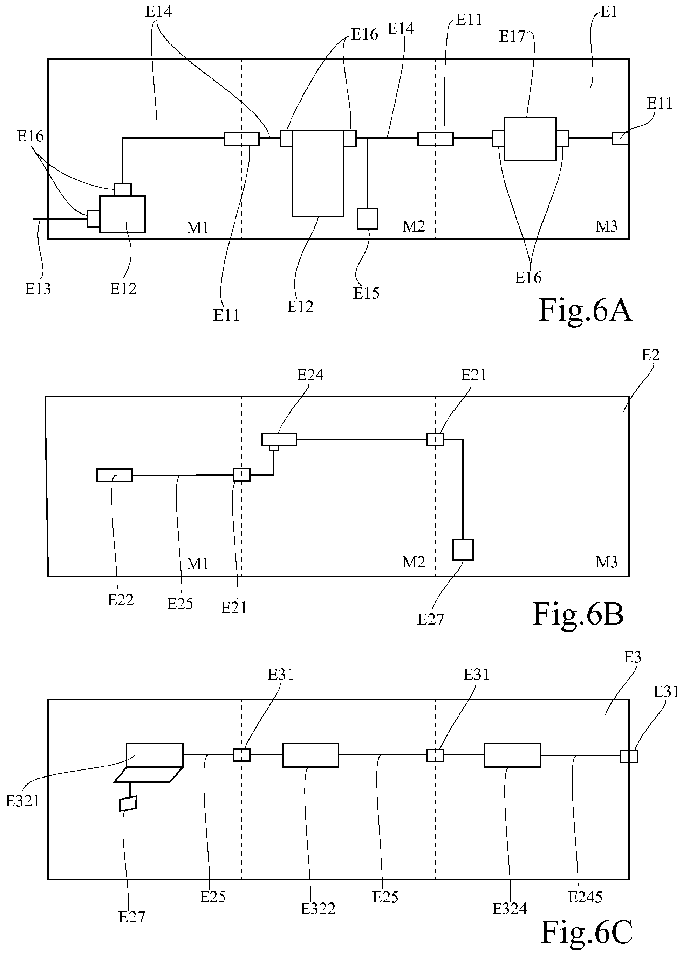

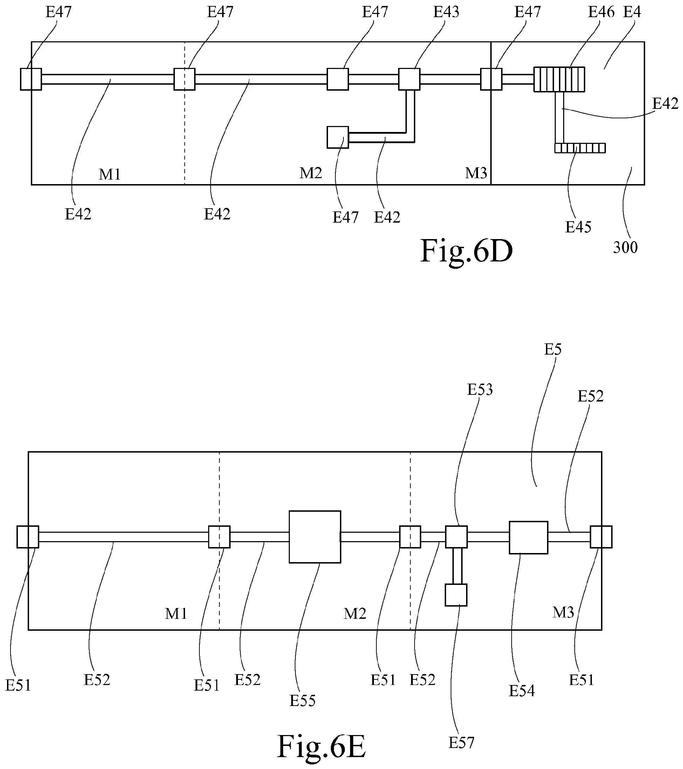

Des exemples de systèmes électrique **E1**, électronique **E2**, informatique **E3**, aéraulique **E4** et fluidique **E5**, sont présentés aux figures 6A, 6B, 6C, 6D et 6E. La composition des sous-systèmes correspondants intégrés aux différents modules **M1**, **M2**, et **M3** est indicative. Toutes autre combinaison peut être envisagée par l'homme du métier en fonction des besoins de l'aménagement. D'autres systèmes fonctionnels, en addition ou alternativement, peuvent être considérés selon les utilisations du bloc opératoire.

Indépendamment du nombre et de la nature des systèmes fonctionnels considérés, les modules **M** de l'ensemble modulaire **1** sont conçus et fabriqués en atelier ou en unité de production, de manière à comprendre les sous-systèmes relatifs aux systèmes fonctionnels qui équipent le bloc opératoire. Chaquemodule **M** comprend plusieurs sous-systèmes sélectionnés parmi un sous-système électrique **E10**, un sous-système électronique **E20**, un sous-système informatique **E30**, un sous-système aéraulique **E40**, et un sous-système fluidique **E50**.

Selon la présente invention, les modules M sont des panneaux muraux **100**, **400**, **500** ou des éléments d'angles 300 conçus de manière à intégrer plusieurs sous-systèmes **E10**, **E20**, **E30**, **E40**, **E50** décrits plus haut.

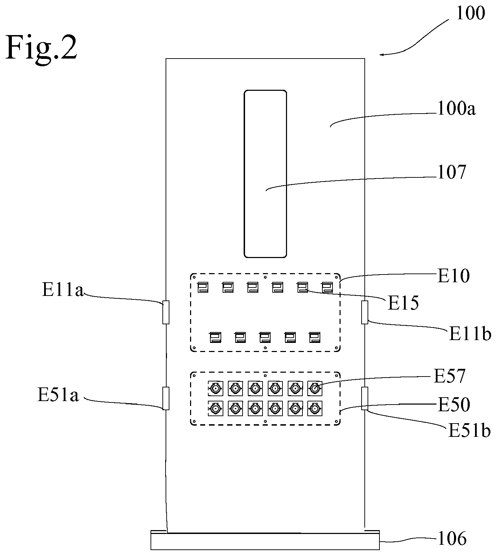

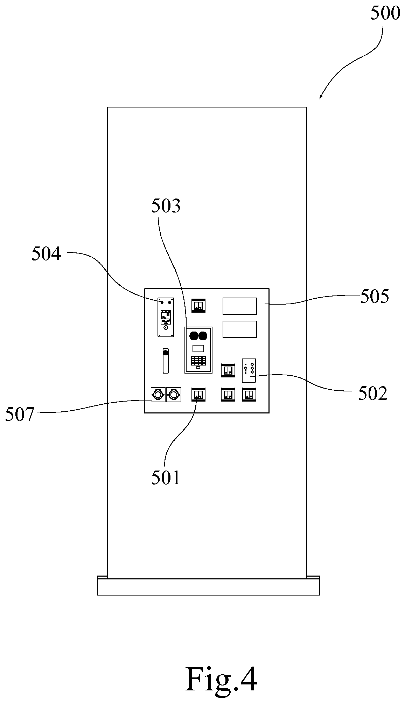

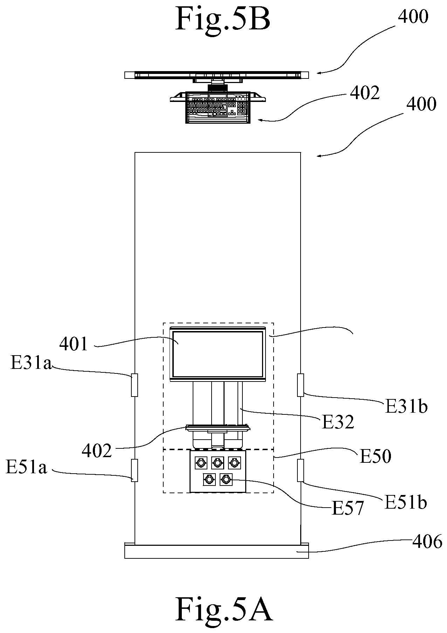

Un panneau mural **100**, **400**, **500** tel que montré aux figures 2, 3A, 3B, 4, 5A et 5B peut notamment être pourvu d'un sous-système électrique **E10** comprenant plusieurs moyens de branchement électrique **E15**. Un panneau mural **100** peut en outre être pourvu d'au moins un moyen de connexion électrique permettant de relier le sous-système électrique **E10** du panneau mural au sous-système électrique **E10** d'un panneau mural adjacent. Un tel moyen de connexion électrique peut en l'occurrence être une première partie **E11a** d'un dispositif de connexion électrique **E11.** La seconde partie **E11b** du même dispositif de connexion électrique **E11** se trouve alors sur un second panneau mural, adjacent au premier panneau mural. Les première **E11a** et seconde **E11b** parties du dispositif de connexion électrique **E11** sont complémentaires, de manière à pouvoir établir la connexion électrique entre les sous-systèmes des panneaux muraux adjacents.

Les première **E11a** et seconde **E11b** parties du dispositif de connexion électrique **E11** sont de préférence situées au niveau des points de contacts du panneau mural **100** avec un panneau mural adjacent. Par exemples les parties **E11a** et **E11b** d'un tel dispositif peuvent être disposées chacune dans l'épaisseur d'un panneau mural et au niveau du champ latéral du panneau mural, de manière à établir un contact direct lors de la pause des panneaux muraux. Un panneau mural peut contenir une première partie **E11a** sur l'un de ses bords, ou adjacent à l'un de ses bords, de manière à pouvoir connecter le sous-système électrique **E10** du panneau mural au sous-système électrique d'un second panneau mural, et une seconde partie **E11b**, disposée sur le bord opposé ou proche du bord opposé, de manière à connecter le sous-système électrique **E10** du panneau mural au sous-système électrique **E10** d'un troisième panneau mural. Les première **E11a** et seconde **E11b** parties d'un dispositif de connexion électrique peuvent être symétriques ou asymétriques. Dans le cas où elles sont asymétriques, il peut être avantageux de les disposer chacune sur un bard donné des panneaux muraux, de manière à ce que les première **E11a** et seconde **E11b** parties d'un dispositif de connexion électrique **E11,** appartenant à deux panneaux adjacents, soient toujours complémentaires l'une de l'autre.

Alternativement, les première **E11a** et seconde **E11b** parties du dispositif de connexion électrique **E11** peuvent être plus éloignées du bord du panneau mural auquel elles appartiennent. Dans ce cas, une pièce de connexion intermédiaire Elle peut être utilisée lors de l'assemblage des panneaux muraux pour établir le contact électriques entre les sous-systèmes électriques **E10** des deux panneaux muraux.

Alternativement ou en plus, un panneau mural **100** peut être muni d'un sous-système fluidique **E50** comprenant un ou plusieurs moyens de branchement fluidique **E57**. Le panneau mural **100** est alors pourvu d'au moins un moyen de connexion fluidique permettant de relier le sous-système fluidique **E50** du panneau mural au sous-système fluidique **E50** d'un panneau mural adjacent. Un tel moyen de connexion fluidique peut en l'occurrence être une première partie **E51a** d'un dispositif de connexion fluidique **E51**. La seconde partie **E51b** du même dispositif de connexion fluidique **E51** se trouve alors sur un second panneau mural, adjacent au premier panneau mural. Les première **E51a** et seconde **E51b** parties du dispositif de connexion fluidique **E51** sont complémentaires, de manière à pouvoir établir la connexion fluidique entre les deux sous-systèmes fluidiques **E50** adjacents.

Les première **E51a** et seconde **E51b** parties du dispositif de connexion fluidique **E51** sont de préférence situées au niveau des points de contacts du panneau mural **100** avec un panneau mural adjacent. Par exemples les parties **E51a** et **E51b** d'un tel dispositif peuvent être disposées chacune dans l'épaisseur d'un panneau mural et au niveau du champ latéral du panneau mural, de manière à établir un contact direct lors de la pause des panneaux muraux. Un panneau mural peut contenir une première partie **E51a** sur l'un de ses bords, ou adjacent à l'un de ses bords, de manière à pouvoir connecter le sous-système fluidique **E50** du panneau mural au sous-système fluidique **E50** d'un second panneau mural, et une seconde partie **E51b**, disposée sur le bord opposé ou proche du bord opposé, de manière à connecter le sous-système fluidique **E50** du panneau mural au sous-système fluidique **E50** d'un troisième panneau mural. Les première **E51a** et seconde **E51b** parties d'un dispositif de connexion fluidique **E51** peuvent être symétriques ou asymétriques. Dans le cas où elles sont asymétriques, il peut être avantageux de les disposer chacune sur un bard donné des panneaux muraux, de manière à ce que les première **E51a** et seconde **E51b** parties de deux panneaux adjacents soient toujours complémentaires l'une de l'autre.

Alternativement, les première **E51a** et seconde **E51b** parties du dispositif de connexion électrique **E51** peuvent être plus éloignées du bord du panneau mural auquel elles appartiennent. Dans ce cas, une pièce de connexion intermédiaire **E51c** peut être utilisée lors de l'assemblage des panneaux muraux pour établir le contact fluidique entre les sous-systèmes fluidiques **E50** des deux panneaux muraux.

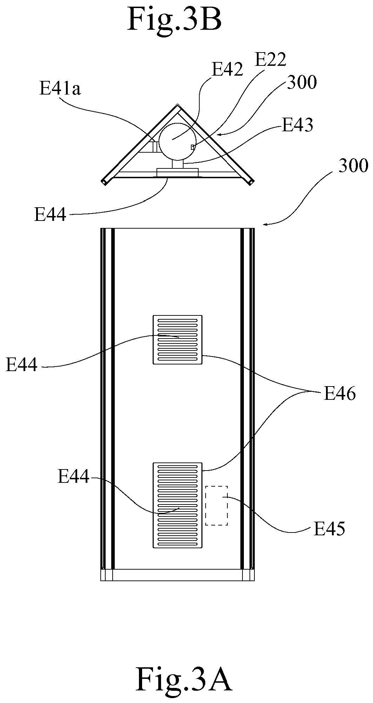

Un élément d'angle **300** est schématisé par les figures 3A et 3B. L'élément d'angle **300** peut être mis à profit pour assembler des panneaux muraux dans des directions différentes, et en l'occurrence suivant deux directions orthogonales. Un élément d'angle **300** présente avantageusement une forme prismatique, où l'une des faces est orientée vers l'intérieur du bloc opératoire, une fois l'élément d'angle **300** en position, et où les deux autres faces forment la continuité des panneaux muraux adjacents. L'intérieur de l'élément d'angle **300** définit un espace technique.

L'élément d'angle **300** intègre de manière avantageuse un sous-système aéraulique **E40** du système aéraulique **E4**. Il peut notamment être équipé sur sa face interne, tournée vers l'intérieur du bloc opératoire une fois l'élément d'angle **300** en position, d'une ou plusieurs grilles de protection **E46**, pouvant être assortie de filtres **E44** ou non. L'espace intérieur de l'élément d'angle **300** peut comprendre un ou plusieurs autres éléments du sous-système aéraulique **E40** tels qu'un ou plusieurs éléments motorisés **E45**, tels qu'un moto-ventilateur, une ou plusieurs gaines **E42** pouvant déboucher vers l'une ou l'autre des grilles de protection **E46**. Les éventuelles dérivations et connexions aérauliques sont établies grâce aux éléments de connexion aérauliques **E43**. Des capteurs **E22** peuvent en outre être disposés sur le sous-système aéraulique **E40** de manière à en mesurer les paramètres. Les éventuels éléments motorisés **E45**, sont de préférence alimentés en électricité par le système électrique **E1**. Des dispositifs de connexion aéraulique peuvent être intégrés à l'élément d'angle **300** pour permettre le raccordement du sous-système aéraulique **E40** d'un élément d'angle **300** au sous-système aéraulique **E40** des panneaux muraux adjacents. Un tel moyen de connexion aéraulique peut en l'occurrence être une première partie **E41a** d'un dispositif de connexion aéraulique **E41**. La seconde partie **E41b** du même dispositif de connexion aéraulique **E41** se trouve alors sur un panneau mural, adjacent à l'élément d'angle **300**. Les première **E41a** et seconde **E41b** parties du dispositif de connexion aéraulique **E41** sont complémentaires, de manière à pouvoir établir la connexion aéraulique entre les deux sous-systèmes adjacents. Un dispositif de connexion aéraulique **A41** peut par exemple être constitué de l'extrémité d'une première gaine **E42**, faisant office de première partie **E41a** du dispositif de connexion aéraulique **E41**, et de l'extrémité d'une seconde gaine **E42** faisant office de seconde partie **E41b** du dispositif de connexion aéraulique **E41**, où les extrémités des première et seconde gaines sont imbriquées l'une dans l'autre ou juxtaposées l'une à l'autre. Les extrémités de gaines ainsi assemblées peuvent en plus être maintenues par un collier de serrage ou tout autre moyen de maintien connu. Une fois que l'assemblage des modules, comprenant les panneaux muraux et les éléments d'angle **300**, est terminé, les flux d'airs créés par le moto-ventilateur peuvent être conduits à travers plusieurs panneaux muraux et éléments d'angle.

Un panneau mural **400** schématisé aux figures 6A et 6B peut être équipé d'un sous-système informatique **E30,** comprenant un dispositif informatique, et d'un sous-système fluidique **E50** comprenant un ou plusieurs moyens de branchement fluidique **E57.** Le sous-système informatique **E30** contient notamment un ordinateur muni d'un écran **401** et d'un clavier **402.** Le sous-système informatique **E30** peut être relié à un ou plusieurs sous-systèmes informatique **E30** ou électronique **E20** présents dans les modules adjacents. A cet effet, les dispositifs de connexion **E31** peuvent être constitués d'une première partie **E31a** disposée sur le panneau mural **400** et d'une seconde partie **E31b** disposée en vis-à-vis sur un panneau mural adjacent ou un élément d'angle **300**. Le dispositif de connexion fluidique **E51** décrit plus haut peut être utilisé pour connecter le sous-système fluidique **E50** du panneau mural **400** avec un sous-système fluidique d'un panneau mural adjacent.

Les sous-systèmes électrique **E10**, électronique **E2**, informatique **E3**, aéraulique **E4** et fluidique **E5**, peuvent être interconnectés au sein d'un même module **M**.

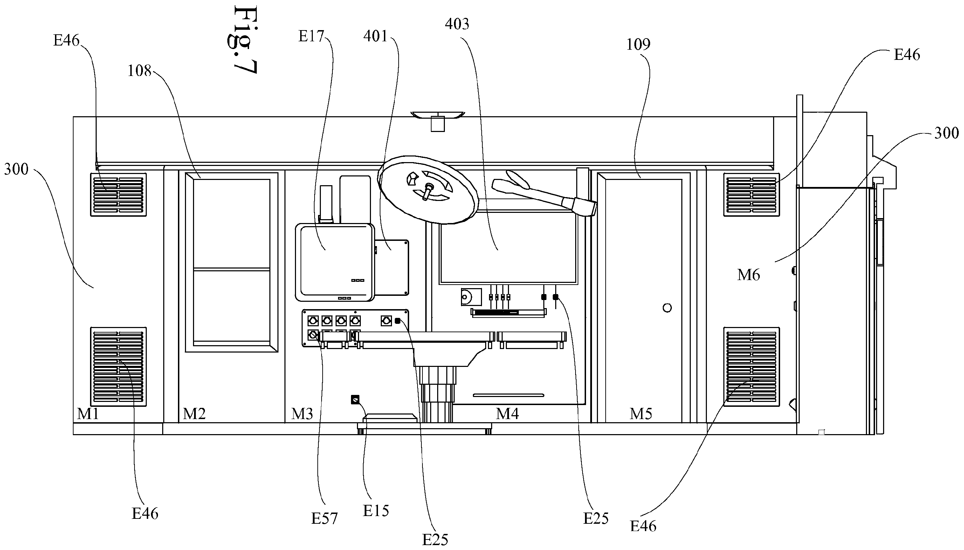

Un panneau mural **500**, schématisé à la figure 7, montre un dispositif de contrôle **505**, comprenant un ou plusieurs interrupteurs **501**, un ou plusieurs moyens de branchements fluidique **E57**, appartenant à un sous-système fluidique **E50**, un ou plusieurs éléments de programmation ou de gestion du matériel **503**, et un ou plusieurs éléments d'affichage **504**, appartenant à un sous-système informatique **E30**.

Dans le cas où les différents modules **M** sont des panneaux muraux **100**, **400**, **500**, chaque module **M** comprend une face interne et une face externe (non représentée). La face interne correspond à la face intérieure au bloc opératoire une fois le panneau mural mis en position. La face externe est tournée vers l'extérieur du bloc opératoire. Les faces interne et externe d'un panneau mural **100**, **400**, **500**, sont de préférence parallèles et reliées l'une à l'autre par des moyens déjà connus. Elles peuvent être reliées l'une à l'autre par l'une ou plusieurs de leur partie supérieure, de leur partie inférieure, et de leurs parties latérales. La partie supérieure s'entend comme étant la partie haute du panneau mural **100**, **400**, **500**, une fois mis en position pour l'aménagement du bloc opératoire. La partie inférieure s'entend comme la partie basse du panneau mural **100**, **400**, **500**, une fois mis en position. Les faces interne et externe peuvent par exemple être reliées l'une à l'autre par une ou plusieurs entretoises dont la longueur correspond à la largeur du panneau mural **100, 400, 500**, et dont l'épaisseur correspond à l'espace technique entre les deux faces interne et externe. Alternativement, l'entretoise peut ne pas être continue mais constituée de plusieurs éléments séparés. Les espaces ainsi aménagés autorisent l'insertion éventuelle d'éléments techniques tels que câbles ou tuyauterie, dans l'espace technique du panneau mural. Alternativement l'entretoise peut être continue et d'une longueur inférieure à la largeur d'un panneau mural **100, 400, 500.** La hauteur d'un panneau mural **100, 400, 500,** correspond de préférence à la hauteur règlementaire d'un bloc opératoire. Alternativement, la hauteur d'un panneau mural **100**, **400**, **500**, peut être légèrement inférieure à la hauteur réglementaire de manière à faciliter la disposition du panneau mural **100**, **400**, **500.** Alternativement, la hauteur d'un panneau mural **100**, **400**, **500**, peut être supérieure à la hauteur réglementaire d'un bloc opératoire de manière à pouvoir l'adapter à des locaux plus anciens dont les hauteurs de plafonds sont plus élevées. Le panneau mural **100**, **400**, **500**, peut alors être, si besoin, recoupé sur place aux dimensions réglementaires.

Le pré-assemblage des faces interne et externe d'un panneau mural **100**, **400**, **500**, est effectué en atelier ou en unité de production, et peut prévoir de laisser un espace libre sur le pourtour du panneau, permettant ainsi son insertion sur des rails de maintien. A titre d'exemple, un panneau mural peut être positionné sur un rail disposé horizontalement au sol, de telle manière que les faces interne et externe se placent de part et d'autre du rail. De manière similaire, un rail vertical peut être inséré entre les bords latéraux des faces interne et externe, permettant ainsi de rigidifier l'ensemble modulaire une fois mis en place. De préférence, un rail vertical peut être inséré simultanément dans deux panneaux muraux contigus et garantir ainsi une meilleure cohésion de l'ensemble. La fabrication du panneau mural en atelier ou en unité de production permet d'intégrer tous les éléments constituant les sous-systèmes **E10**, **E20**, **E30**, **E40**, **E50** devant être incorporés au panneau mural. Certains éléments ou la totalité des éléments des dispositifs de connexion électrique **E11,** électronique **E21**, informatique **E31**, aéraulique **E41** et fluidique **E51** peuvent également être intégrés au panneau mural lors de sa fabrication en atelier ou en unité de production. Alternativement, Certains éléments ou la totalité des éléments des dispositifs de connexion électrique **E11,** électronique **E21**, informatique **E31**, aéraulique **E41** et fluidique **E51** peuvent être disposés lors de l'assemblage des modules **M** pour l'aménagement du bloc opératoire.

Les moyens de branchement électrique **E15**, électronique **E27**, informatique **E37**, aéraulique **E47** et fluidiques **E57** sont disposés, quand ils sont présents, sur la face interne du panneau mural, et peuvent être reliés aux éléments du même sous-ensemble, ou d'un autre sous-ensemble, situés à l'intérieur du panneau mural dans l'espace technique délimité par ses faces interne et externe. Grace à ces moyens de branchement, l'utilisateur peut brancher à l'un ou l'autre des systèmes fonctionnels du bloc opératoire les appareils nécessaires à ses activités, qu'ils soient de type électrique, électronique, informatique, aéraulique ou fluidique.

Un panneau mural **100, 400, 500,** peut être alternativement ou en plus muni d'un ou plusieurs moyen d'accès tels qu'une trappe amovible **107**, une fenêtre **108** ou une porte **109**, lors de sa fabrication en atelier ou en unité de production. La trappe amovible **107** permet l'accès à l'espace technique aménagé entre les faces interne et externe du panneau mural. Elle peut être par exemple clipsée dans l'épaisseur de la face interne, ou articulée par une charnière, ou maintenue par tout autre moyen déjà connu tel que des vis ou des agrafes. La trappe amovible **107** permet de faciliter la mise en place des différents sous-systèmes lors de l'aménagement du bloc opératoire ou d'accéder facilement aux éléments techniques en cas de réparation. Des moyens d'accès tels que fenêtres **108** et portes **109** peuvent être disposés dans un panneau mural **100**, **400**, **500**, lors de sa fabrication en atelier ou en unité de production. Des accessoires complémentaires tels que stores occultants, manuels ou motorisés, peuvent être également prédisposés à ce moment.

L'espace technique peut en outre être équipé d'un ou plusieurs dispositifs de guidage permettant le placement et le maintien des éléments de distribution/extraction de fluides et des éléments d'alimentation électrique et informatique. Un dispositif de guidage peut être sélectionné parmi le groupe consistant en glissière, tube, boyaux, entretoise, goulotte et équivalents. Les dispositifs de guidage sont fixés sur l'une ou l'autre ou les deux des faces interne **100a** ou externe, et peuvent prendre des orientations variées entre l'orientation horizontale, verticale, ou oblique. Les dispositifs de guidages peuvent affleurer sur les champs du panneau mural **100** de manière à pouvoir insérer les éléments de distribution/extraction des fluides et les éléments d'alimentation électrique et informatique, lors de l'opération d'aménagement du local, et à les guider vers les dispositifs de connexion **102/104.** La trappe **107** permet de faciliter l'acheminement des éléments de distribution/extraction de fluides et des éléments d'alimentation électrique et informatique le long du ou des dispositifs de guidage.

Dans le but de rigidifier la structure des panneaux muraux **100, 400, 500,** une ou plusieurs entretoises, pouvant être en polyéthylène pressé PEHD, sont disposées entre la face interne et la face externe des panneaux muraux **100, 400, 500.** Avantageusement, un panneau mural **100, 400, 500,** peut comprendre à son extrémité inférieure une plinthe 106. La plinthe **106** peut être constituée d'un matériau polymère rigide ou souple, ou d'un matériau métallique tel que l'aluminium.

Cet arrangement des dispositifs de guidage est particulièrement adapté aux conceptions où les éléments de distribution et/ou extraction de fluide, ou les éléments d'alimentation électrique et informatique doivent transiter d'un panneau mural à l'autre. Alternativement, dans le cas où les panneaux muraux sont alimentés par le plafond, les dispositifs de guidage permettent l'acheminement des éléments de distribution et/ou extraction de fluide, ou des éléments d'alimentation électrique et informatique, depuis le bord supérieur des panneaux muraux jusqu'aux dispositifs de connexion correspondants.

Les panneaux muraux **100, 400, 500,** peuvent être reliés entre eux par l'intermédiaire d'un d'un élément d'angle **300**, tel que représenté, vu de face, sur la figure 3A et, vu de dessus, sur la figure 3B. L'espace technique délimité par ses différentes faces peut être mis à profit pour intégrer des éléments techniques constituant les systèmes fonctionnels du bloc opératoire. De manière particulière avantageuse, une grande partie des éléments techniques constituant le système aéraulique **E4** sont disposés dans les éléments d'angles **300**.

L'ensemble des équipements fixés ou intégrés aux panneaux muraux **100, 400** et **500,** ainsi qu'aux éléments d'angle **300**, sont préinstallés en atelier ou en unité de production.

L'ensemble modulaire **1** se compose d'un nombre variable de modules **M**, pouvant être pré-équipés de manière identique ou différente. Les différents modules **M1**, **M2**, **M3**, **M4**, **M5**, **M6...Mz** constituant un bloc opératoire peuvent comprendre un nombre variable de panneaux muraux **100, 400, 500,** et un nombre variable d'éléments d'angles 300. L'ensemble modulaire de l'invention peut optionnellement comprendre les rails de fixation décrits plus haut, et pouvant être disposés de manière horizontale ou verticale. Les panneaux muraux **M1**, **M2**, **M3**, **M4**, **M5**, **M6...Mz** sont de préférence de dimensions égales, notamment en termes de largeur, d'épaisseur et de hauteur. Des panneaux muraux plus ou moins larges peuvent cependant être prévus de manière à adapter la longueur des parois à celles du bloc opératoire à aménager. Les panneaux muraux dont la largeur est supérieure ou inférieure à celle des autres panneaux muraux ne contiennent de préférence aucun équipement et ne sont utilisés que comme élément d'ajustement de l'ensemble modulaire.

De manière optionnelle, les panneaux muraux **100**, **400** et **500**, et les éléments d'angle **300**, sont pourvus d'une rainure mâle sur l'un de leur rebords latéraux, et d'une rainure femelle complémentaire sur le rebord latéral opposé, de manière à pouvoir se clipser les uns aux autres lors de leur assemblage.

De manière préférentielle, les panneaux muraux **100**, **400**, **500** et les éléments d'angle **300** sont maintenus par une entretoise verticale commune à deux panneaux contigus, ou à un panneau mural **100**, **400**, **500** et un élément d'angle **300**, et au moins partiellement recouverte de la face interne des panneaux muraux **100**, **400**, **500** et de l'élément d'angle **300** le cas échéant. Un joint peut éventuellement être apposé sur l'interstice restant de manière à produire une surface totalement lisse constituée par l'ensemble des panneaux muraux et des éléments d'angle **300**. Alternativement, un revêtement peut être apposé sur l'ensemble des panneaux muraux **100**, **400**, **500** et éléments d'angle **300** après leur installation.

L'homme du métier comprend aisément que le nombre de panneaux muraux **100**, **400**, **500** et d'éléments d'angle **300**, ainsi que la composition des sous-systèmes qu'ils comprennent ne se limitent pas aux exemples cité. Toutes les combinaisons d'équipements sont envisageables, ainsi que leur combinaison avec des panneaux muraux ayant d'autres équipements non spécifiquement mentionnés ici.

La présente invention couvre également selon la revendication 8, un procédé d'équipement d'une salle d'opération.

Lors de ce procédé, l'assemblage des modules **M** s'accompagne de l'interconnections des sous-systèmes électriques **E10**, électronique **E20**, informatique **E30**, aéraulique **E40**, et fluidiques **E50**, nécessaires au fonctionnement des systèmes fonctionnels correspondants. A cet effet, les dispositifs de connexion électrique **E11,** électroniques **E21**, informatique **E31**, aéraulique **E41** et fluidique **E51**, permettent une interconnexion facile des sous-systèmes correspondants. La mise en place des modules **M** ne nécessite pas de corps de métiers de spécialité.

Le procédé comprend une étape préalable de conception, où les éléments techniques nécessaires au fonctionnement des systèmes électrique **E1**, électronique **E2**, informatique **E3**, aéraulique **E4** et fluidique **E5** sont répartis sur plusieurs modules **M1** à **Mz**, de manière à optimiser leur agencement.

## Revendications

1. Ensemble modulaire (1) pour l'équipement d'une salle d'opération **caractérisé en ce qu'**il comprend plusieurs systèmes fonctionnels dont au moins un système électrique (E1), un système électronique (E2), un système informatique (E3), un système aéraulique (E4) et un système fluidique (E5),
l'ensemble modulaire comprenant plusieurs modules (M), sous forme de panneaux muraux (100, 400, 500) et/ou des éléments d'angle (300), préfabriqués dans une unité de production et assemblés dans ladite salle d'opération, chacun des modules (M) étant pré-équipé, lors de sa fabrication, de plusieurs sous-systèmes sélectionnés parmi le groupe constitué de sous-système électrique (E10), de sous-système électronique (E20), de sous-système informatique (E30), de sous-système aéraulique (E40) et de sous-système fluidique (E50), chacun des sous-systèmes contenus dans les modules (M) représentant une partie du système fonctionnel correspondant (E1, E2, E3, E4, E5) et lesdits sous-systèmes (E10, E20, E30, E40, E50) d'un même système fonctionnel étant appariés par l'assemblage des modules (M) dans la salle d'opération de manière à constituer l'intégralité dudit système fonctionnel, ledit ensemble modulaire étant en outre **caractérisé en ce que** chaque sous-système (E10, E20, E30, E40, E50) d'un module contient un ou plusieurs moyens de connexion correspondants (E11, E21, E31, E41, E51) permettant de connecter deux sous-systèmes correspondants de modules contigus.

2. Ensemble modulaire selon la revendication 1, **caractérisé en ce que** lesdits modules (M) sont des panneaux muraux (100, 200, 400, 500) comprenant une surface interne (100a) et une surface externe, parallèle à la surface interne, et séparée de la surface interne par un espace technique comprenant tout ou partie des sous-systèmes (E10, E20, E30, E40, E50), ou des éléments d'angle (300).

3. Ensemble modulaire selon les revendications 1 ou 2, **caractérisé en ce que** le sous-système électrique (E10) d'un module contient un ou plusieurs moyen de connexion électrique (E11) permettant de connecter deux sous-systèmes électriques de modules contigus, le sous-système électronique (E20) d'un module contient un ou plusieurs moyen de connexion électronique (E21) permettant de connecter deux sous-systèmes électroniques de modules contigus, le sous-système informatique (E30) d'un module contient un ou plusieurs moyens de connexion informatique (E21) permettant de connecter deux sous-systèmes informatiques de modules contigus, le sous-système aéraulique (E40) d'un module contient un ou plusieurs moyens de connexion aéraulique (E41) permettant de connecter deux sous-systèmes aérauliques de modules contigus, et le sous-système fluidique (E50) d'un module contient un ou plusieurs moyens de connexion fluidiques (E51) permettant de connecter deux sous-systèmes fluidiques de modules contigus.

4. Ensemble modulaire selon l'une ou l'autre des revendication 1 à 3, **caractérisé en ce que** le sous-système électrique (E10) d'un module (M), lorsqu'il est présent, contient un moyen de branchement électrique (E15), le sous-système électronique (E20) d'un module (M), lorsqu'il est présent, contient un moyen de branchement électronique (E27), le sous-système informatique (E30) d'un module (M), lorsqu'il est présent, contient un moyen de branchement électronique (E27), le sous-système aéraulique (E40), lorsqu'il est présent, contient un moyen de branchement aéraulique (E47), ou le sous-système fluidique (E50), lorsqu'il est présent, contient un moyen de branchement fluidique (E57).

5. Ensemble modulaire selon l'une des revendications 1 à 4, **caractérisé en ce que** le sous-système électrique (E10) d'un module (M) contient un ou plusieurs des dispositifs sélectionnés parmi le groupe constitué d'appareils électriques (E12), d'alimentation électrique (E13), de conducteurs électriques (E14), de dispositifs motorisés (E120), de dispositifs d'éclairage (E121), de dispositifs thermostatiques (E122) et de dispositifs de connexion électriques (E16), le sous-ensemble électronique (E20) d'un module (M) contient un ou plusieurs des dispositifs sélectionnés parmi le groupe constitué de capteurs (E22), processeurs (E23), dispositifs d'alerte (E24), et de dispositifs de connexion électroniques (E25), le sous-système informatique (E30) d'un module (M) contient un ou plusieurs des dispositifs sélectionnés parmi le groupe constitué des interfaces de programmation (E321) et les interfaces de contrôle (E322), et des afficheurs (E324), le sous-système aéraulique (E40) d'un module (M) contient un ou plusieurs dispositifs sélectionnés parmi le groupe constitué de gaines (E42), de dispositifs de connexion aéraulique (E43), de filtres (E44), d'éléments motorisés (E45), et des grilles de protection (E46), et le sous-système fluidique (E50) d'un module (M) contient un ou plusieurs des dispositifs sélectionnés parmi le groupe constitué de conduites (E52), de dispositifs de connexions fluidiques (E53), de dispositifs motorisés (E54), et des éléments de thermorégulation (E55).

6. Ensemble modulaire selon l'une ou l'autre des revendications 1 à 5, **caractérisé en ce que** un ou plusieurs desdits modules comprennent en outre une ou plusieurs ouvertures sélectionnées parmi le groupe constitué de trappe amovible (107), de vitrages fixes et de porte ou de fenêtre pouvant être ouvert ou fermé.

7. Ensemble modulaire selon l'une des revendications précédentes, **caractérisé en ce que** lesdits modules (M) sont des panneaux muraux dont les surfaces internes à la salle d'opération ne présentent aucune aspérité, et sont revêtues d'une couche protectrice conforme aux exigences réglementaires.

8. Procédé d'équipement d'une salle d'opération comprenant plusieurs ensembles fonctionnels dont au moins un système électrique (E1), un système électronique (E2), un système informatique (E3) un système aéraulique (E4) et un système fluidique (E5), comprenant les étapes de :
a) Disposer dans la salle d'opération un premier module (M1) sous forme d'un panneau mural (100, 400, 500) et/ou d'un élément d'angle (300), préfabriqué dans une unité de production, comprenant plusieurs sous-systèmes sélectionnés parmi le groupe constitué de sous-système électrique (E10), de sous-système électronique (E20), de sous-système informatique (E30), de sous-système aéraulique (E40) et de sous-système fluidique (E50) ;
b) Disposer un second module (M2) sous forme d'un panneau mural (100, 400, 500) et/ou d'un élément d'angle (300), préfabriqué dans une unité de production, et comprenant plusieurs sous-systèmes sélectionnés parmi le groupe constitué de sous-système électrique (E10), de sous-système électronique (E20), de sous-système informatique (E30), de sous-système aéraulique (E4) et de sous-système fluidique (E50), de manière à ce que les sous-systèmes (E10, E20, E30, E40, E50) du premier module (M1) et du second module (M2) soient connectés l'un à l'autre, chaque sous-système (E10, E20, E30, E40, E50) d'un module contenant un ou plusieurs moyens de connexion correspondants (E11, E21, E31, E41, E51) permettant de connecter deux sous-systèmes correspondants de modules contigus ;
c) Réitérer l'étape b) de façon itérative jusqu'à la disposition du dernier module (Mz), de manière à ce que les sous-systèmes (E10, E20, E30, E40, E50) de tous les modules soient connectés les uns aux autres pour former l'intégralité des systèmes fonctionnels (E1, E2, E3, E4, E5) de la salle d'opération.

9. Procédé selon la revendication 8, **caractérisé en ce que** le sous-système électrique (E10) d'un module contient un ou plusieurs moyens de connexion électriques (E11) permettant de connecter deux sous-systèmes électriques de modules contigus, **en ce que** le sous-système électronique (E20) d'un module contient un ou plusieurs moyens de connexion électronique (E21) permettant de connecter deux sous-systèmes électroniques de modules contigus, **en ce que** le sous-système informatique (E30) d'un module contient un ou plusieurs moyens de connexion électronique (E21) permettant de connecter deux sous-systèmes informatiques de modules contigus, **en ce que** le sous-système aéraulique (E40) d'un module contient un ou plusieurs moyen de connexion aéraulique (E41) permettant de connecter deux sous-systèmes aérauliques (E40) de modules contigus et **en ce que** le sous-système fluidique (E50) d'un module contient un ou plusieurs moyens de connexion fluidique (E51) permettant de connecter deux sous-systèmes fluidiques de modules contigus.

10. Procédé selon les revendications 8 ou 9, **caractérisé en ce que** les éléments techniques nécessaires au fonctionnement des systèmes électrique (E1), électronique (E2), informatique (E3), aéraulique (E4) et fluidique (E5) sont répartis sur plusieurs modules au moment de la fabrication desdits modules dans une unité de production.

## Patentansprüche

1. Modulare Anordnung (1) für die Ausstattung eines Operationssaals, **dadurch gekennzeichnet, dass** sie mehrere funktionelle Systeme umfasst, davon mindestens ein elektrisches System (E1), ein elektronisches System (E2), ein Informatik-System (E3), ein aeraulisches System (E4) und ein fluidisches System (E5),
wobei die modulare Anordnung mehrere Module (M) in Form von Wandplatten (100, 400, 500) und/oder Winkelelementen (300) umfasst, die in einer Produktionseinheit vorgefertigt und in dem Operationssaal zusammengebaut sind, wobei jedes der Module (M) bei der Fertigung mit mehreren Untersystemen vorausgestattet ist, ausgewählt aus der Gruppe, bestehend aus einem elektrischen Untersystem (E10), einem elektronischen Untersystem (E20), einem Informatik-Untersystem (E30), einem aeraulischen Untersystem (E40) und einem fluidischen Untersystem (E50), wobei jedes der Untersysteme, enthalten in den Modulen (M), einen Teil des entsprechenden funktionellen Systems (EI, E2, E3, E4, ES) darstellt, und wobei die Untersysteme (E10, E20, E30, E40, E50) eines gleichen funktionellen Systems durch den Zusammenbau der Module (M) im Operationssaal paarweise angeordnet sind, um die Gesamtheit des funktionellen Systems zu bilden, wobei die modulare Anordnung außerdem **dadurch gekennzeichnet ist, dass** jedes Untersystem (E10, E20, E30, E40, E50) eines Moduls ein oder mehrere entsprechende Verbindungsmittel (E11, E21, E31, E41, E51) enthält, die ermöglichen, zwei entsprechende Untersysteme von benachbarten Modulen zu verbinden.

2. Modulare Anordnung nach Anspruch 1, **dadurch gekennzeichnet, dass** die Module (M) Wandplatten (100, 200, 400, 500) sind, die eine Innenfläche (100a) und eine Außenfläche, parallel zur Innenfläche und getrennt von der Innenfläche durch einen technischen Raum umfassen, umfassend die Gesamtheit oder einen Teil der Untersysteme (E10, E20, E30, E40, E50), oder der Winkelelemente (300).

3. Modulare Anordnung nach Anspruch 1 oder 2, **dadurch gekennzeichnet, dass** das elektrische Untersystem (E10) eines Moduls ein oder mehrere Mittel zur elektrischen Verbindung (E11) enthält, die ermöglichen, zwei elektrische Untersysteme von benachbarten Modulen zu verbinden, das elektronische Untersystem (E20) eines Moduls ein oder mehrere Mittel zur elektronischen Verbindung (E21) enthält, die ermöglichen, zwei elektronische Untersysteme von benachbarten Modulen zu verbinden, das Informatik-Untersystem (E30) eines Moduls ein oder mehrere Mittel zur Informatik-Verbindung (E21) enthält, die ermöglichen, zwei Informatik-Untersysteme von benachbarten Modulen zu verbinden, das aeraulische Untersystem (E40) eines Moduls ein oder mehrere Mittel zur aeraulischen Verbindung (E41) enthält, die ermöglichen, zwei aeraulische Untersysteme von benachbarten Modulen zu verbinden, und das fluidische Untersystem (E50) eines Moduls ein oder mehrere Mittel zur fluidischen Verbindung (E51) enthält, die ermöglichen, zwei fluidische Untersysteme von benachbarten Modulen zu verbinden.

4. Modulare Anordnung nach dem einen oder dem anderen der Ansprüche 1 bis 3, **dadurch gekennzeichnet, dass** das elektrische Untersystem (E10) eines Moduls (M), wenn es vorhanden ist, ein Mittel zum elektrischen Anschluss (E15) enthält, das elektronische Untersystem (E20) eines Moduls (M), wenn es vorhanden ist, ein Mittel zum elektronischen Anschluss (E27) enthält, das Informatik-Untersystem (E30) eines Moduls (M) wenn es vorhanden ist, ein Mittel zum elektronischen Anschluss (E27) enthält, das aeraulische Untersystem (E40), wenn es vorhanden ist, ein Mittel zum aeraulischen Anschluss (E47) enthält, oder das fluidische Untersystem (E50), wenn es vorhanden ist, ein Mittel zum fluidischen Anschluss (E57) enthält.

5. Modulare Anordnung nach einem der Ansprüche 1 bis 4, **dadurch gekennzeichnet, dass** das elektrische Untersystem (E10) eines Moduls (M) eine oder mehrere der ausgewählten Vorrichtungen aus der Gruppe, bestehend aus elektrischen Geräten (E12), Stromversorgung (E13), elektrischen Leitern (E14), motorisierten Vorrichtungen (E120), Beleuchtungsvorrichtungen (E121), thermostatischen Vorrichtungen (E122) und Vorrichtungen zur elektrischen Verbindung (E16), umfasst, die elektronische Unteranordnung (E20) eines Moduls (M) eine oder mehrere der Vorrichtungen, ausgewählt aus der Gruppe, bestehend aus Sensoren (E22), Prozessoren (E23), Warnvorrichtungen (E24) und Vorrichtungen zur elektronischen Verbindung (E25), umfasst, das Informatik-Untersystem (E30) eines Moduls (M) eine oder mehrere der Vorrichtungen, ausgewählt aus der Gruppe, bestehend aus Programmierschnittstellen (E321) und den Steuerschnittstellen (E322) und Anzeigevorrichtungen (E324), umfasst, das aeraulische Untersystem (E40) eines Moduls eine oder mehrere Vorrichtungen, ausgewählt aus der Gruppe, bestehend aus Manschetten (E42), Vorrichtungen zur aeraulischen Verbindung (E43), Filtern (E44), motorisierten Elementen (E45) und Schutzgittern (E46), umfasst, und das fluidische Untersystem (E50) eines Moduls (M) eine oder mehrere der Vorrichtungen, ausgewählt aus der Gruppe, bestehend aus Leitungen (E52), Vorrichtungen zur fluidischen Verbindung (E53), motorisierten Vorrichtungen (E54) und Thermoregulierungselementen (E55), umfasst.

6. Modulare Anordnung nach dem einen oder dem anderen der Ansprüche 1 bis 5, **dadurch gekennzeichnet, dass** eines oder mehrere der Module außerdem eine oder mehrere Öffnungen umfassen, ausgewählt aus der Gruppe, bestehend aus einer abnehmbaren Klappe (107), festen Verglasungen und einer Tür oder einem Fenster, die geöffnet oder geschlossen werden können.

7. Modulare Anordnung nach einem der vorhergehenden Ansprüche, **dadurch gekennzeichnet, dass** die Module (M) Wandplatten sind, deren Innenflächen zum Operationssaal keine Unebenheiten aufweisen und mit einer Schutzschicht gemäß den rechtlichen Anforderungen bedeckt sind.

8. Verfahren zur Ausstattung eines Operationssaals, umfassend mehrere funktionelle Anordnungen, davon mindestens ein elektrisches System (E1), ein elektronisches System (E2), ein Informatik-System (E3), ein aeraulisches System (E4) und ein fluidisches System (E5), umfassend die folgenden Schritte:
a) Anordnen im Operationssaal eines ersten Moduls (M1) in Form einer Wandplatte (100, 400, 500) und/oder eines Winkelelements (300), das in einer Produktionseinheit vorgefertigt ist, umfassend mehrere Untersysteme, ausgewählt aus der Gruppe, bestehend aus einem elektrischen Untersystem (E10), einem elektronischen Untersystem (E20), einem Informatik-Untersystem (E30), einem aeraulischen Untersystem (E40) und einem fluidischen Untersystem (E50);
b) Anordnen eines zweiten Moduls (M2) in Form einer Wandplatte (100, 400, 500) und/oder eines Winkelelements (300), das in einer Produktionseinheit vorgefertigt ist, und umfassend mehrere Untersysteme, ausgewählt aus der Gruppe, bestehend aus einem elektrischen Untersystem (E10), einem elektronischen Untersystem (E20), einem Informatik-Untersystem (E30), einem aeraulischen Untersystem (E4) und einem fluidischen Untersystem (E50), so dass die Untersysteme (E10, E20, E30, E40, E50) des ersten Moduls (M1) und des zweiten Moduls (M2) miteinander verbunden sind, wobei jedes Untersystem (E10, E20, E30, E40, E50) eines Moduls ein oder mehrere entsprechende Verbindungsmittel (E11, E21, E31, E41, E51) enthält, die ermöglichen, zwei entsprechende Untersysteme von benachbarten Systemen zu verbinden;
c) Widerholen von Schritt b) auf iterative Weise bis zur Anordnung des letzten Moduls (Mz), so dass die Untersysteme (E10, E20, E30, E40, E50) aller Module miteinander verbunden sind, um die Gesamtheit der funktionellen Systeme (E1, E2, E3, E4, E5) des Operationssaals zu bilden.

9. Verfahren nach Anspruch 8, **dadurch gekennzeichnet, dass** das elektrische Untersystem (E10) eines Moduls ein oder mehrere Mittel zur elektrischen Verbindung (E11) enthält, die ermöglichen, zwei elektrische Untersysteme von benachbarten Modulen zu verbinden, dadurch, dass das elektronische Untersystem (E20) eines Moduls ein oder mehrere Mittel zur elektronischen Verbindung (E21) enthält, die ermöglichen, zwei elektronische Untersysteme von benachbarten Modulen zu verbinden, dadurch, dass das Informatik-Untersystem (E30) eines Moduls ein oder mehrere Mittel zur elektronischen Verbindung (E21) enthält, die ermöglichen, zwei Informatik-Untersysteme von benachbarten Modulen zu verbinden, dadurch, dass das aeraulische Untersystem (E40) eines Moduls ein oder mehrere Mittel zur aeraulischen Verbindung (E41) enthält, die ermöglichen, zwei aeraulische Untersysteme (E40) von benachbarten Modulen zu verbinden, und dadurch, dass das fluidische Untersystem (E50) eines Moduls ein oder mehrere Mittel zur fluidischen Verbindung (E51) enthält, die ermöglichen, zwei fluidische Untersysteme von benachbarten Modulen zu verbinden.

10. Verfahren nach Anspruch 8 oder 9, **dadurch gekennzeichnet, dass** die technischen Elemente, die zum Funktionieren des elektrischen (E1), elektronischen (E2), Informatik- (E3), aeraulischen (E4) und fluidischen (E5) Systems erforderlich sind, auf mehrere Module zum Zeitpunkt der Herstellung der Module in einer Produktionseinheit verteilt sind.

## Claims

1. A modular assembly (1) for equipping an operating room, **characterized in that** it comprises several functional systems, including at least an electrical system (E1), an electronic system (E2), a computer system (E3), an aeraulic system (E4) and a fluidic system (E5),
the modular assembly comprising several modules (M), in the form of wall panels (100, 400, 500) and/or corner elements (300), prefabricated in a production unit and assembled in said operating room, each of the modules (M) being pre-equipped, during manufacture, with several subsystems selected from the group made up of an electrical subsystem (E10), an electronic subsystem (E20), a computer subsystem (E30), an aeraulic subsystem (E40) and a fluidic subsystem (E50), each of the subsystems contained in the modules (M) representing a part of the corresponding functional system (E1, E2, E3, E4, E5) and said subsystems (E10, E20, E30, E40, E50) of a same functional system being paired by the assembly of the modules (M) in the operating room so as to constitute the entirety of said functional system, said modular assembly further being **characterized in that** each subsystem (E10, E20, E30, E40, E50) of a module contains one or several corresponding connection means (E11, E21, E31, E41, E51) allowing two corresponding subsystems of adjacent modules to be connected.

2. The modular assembly according to claim 1, **characterized in that** said modules (M) are wall panels (100, 200, 400, 500) comprising an inner surface (100a) and an outer surface, parallel to the inner surface, and separated from the inner surface by a technical area comprising all or part of the subsystems (E10, E20, E30, E40, E50), or corner elements (300).

3. The modular assembly according to claims 1 or 2, **characterized in that** the electrical subsystem (E10) of a module contains one or several electrical connection means (E11) allowing connection of two electrical subsystems of adjacent modules, the electronic subsystem (E20) of a module contains one or several electronic connection means (E21) allowing connection of two electronic subsystems of adjacent modules, the computer subsystem (E30) of a module contains one or several computer connection means (E21) allowing connection of two computer subsystems of adjacent modules, the aeraulic subsystem (E40) of a module contains one or several aeraulic connection means (E41) allowing connection of two aeraulic subsystems of adjacent modules, and the fluidic subsystem (E50) of a module contains one or several fluidic connection means (E51) allowing connection of two fluidic subsystems of adjacent modules.

4. The modular assembly according to one or the other of claims 1 to 3, **characterized in that** the electrical subsystem (E10) of a module (M), when it is present, contains an electrical plugging means (E15), the electronic subsystem (E20) of a module (M), when it is present, contains an electronic plugging means (E27), the computer system (E30) of a module (M), when it is present, contains an electronic plugging means (E27), the aeraulic subsystem (E40), when it is present, contains an aeraulic plugging means (E47), or the fluidic subsystem (E50), when it is present, contains a fluidic plugging means (E57).

5. The modular assembly according to one of claims 1 to 4, **characterized in that** the electrical subsystem (E10) of a module (M) contains one or several of the devices selected from the group consisting of electrical apparatuses (E12), power supplies (E13), electrical conductors (E14), motorized devices (E120), lighting devices (E121), thermostatic devices (E122) and electrical connection devices (E16), the electronic subassembly (E20) of a module (M) contains one or several of the devices selected from the group consisting of sensors (E22), processors (E23), alert devices (E24) and electronic connection devices (E25), the computer subsystem (E30) of a module (M) contains one or several of the devices selected from the group consisting of programming interfaces (E321) and control interfaces (E322), and displays (E324), the aeraulic subsystem (E40) of a module (M) contains one or several devices selected from the group consisting of sheaths (E42), aeraulic connection devices (E43), filters (E44), motorized elements (E45) and protective grids (E46), and the fluidic subsystem (E50) of a module (M) contains one or several of the devices selected from the group consisting of ducts (E52), fluidic connection devices (E53), motorized devices (E54) and temperature control devices (E55).

6. The modular assembly according to one or the other of claims 1 to 5, **characterized in that** one or several of said modules further comprise one or several openings selected from the group consisting of a removable hatch (107), fixed glass and a door or window able to be opened or closed.

7. The modular assembly according to one of the preceding claims, **characterized in that** said modules (M) are wall panels, the inner surfaces of which in the operating room have no roughness, and are coated with a protective layer according to the regulatory requirements.

8. A method for equipping an operating room comprising several functional assemblies, including at least an electrical system (E1), an electronic system (E2), a computer system (E3), an aeraulic system (E4) and a fluidic system (E5), comprising the steps of:
a) Arranging, in the operating room, a first module (M1) in the form of a wall panel (100, 400, 500) and/or a corner element (300), prefabricated in a production unit, comprising several subsystems selected from the group consisting of an electrical subsystem (E10), an electronic subsystem (E20), a computer subsystem (E30), an aeraulic subsystem (E40) and a fluidic subsystem (E50);
b) Arranging a second module (M2) in the form of a wall panel (100, 400, 500) and/or corner element (300), prefabricated in a production unit, and comprising several subsystems selected from the group consisting of an electrical subsystem (E10), an electronic subsystem (E20), a computer subsystem (E30), an aeraulic subsystem (E40) and a fluidic subsystem (E50), such that the subsystems (E10, E20, E30, E40, E50) of the first module (M1) and of the second module (M2) are connected to one another, each subsystem (E10, E20, E30, E40, E50) of a module containing one or several corresponding connection means (E11, E21, E31, E41, E51) allowing connection of two corresponding subsystems of adjacent modules;
c) Reiterating step b) iteratively until the last module (Mz) is positioned, such that the subsystems (E10, E20, E30, E40, E50) of all of the modules are connected to one another to form the entirety of the functional systems (E1, E2, E3, E4, E5) of the operating room.

9. The method according to claim 8, **characterized in that** the electrical subsystem (E10) of a module contains one or several electrical connection means (E11) allowing connection of two electrical subsystems of adjacent modules, **in that** the electronic subsystem (E20) of a module contains one or several electronic connection means (E21) allowing connection of two electronic subsystems of adjacent modules, **in that** the computer subsystem (E30) of a module contains one or several electronic connection means (E21) allowing connection of two computer subsystems of adjacent modules, **in that** the aeraulic subsystem (E40) of a module contains one or several aeraulic connection means (E41) allowing connection of two aeraulic subsystems (E40) of adjacent modules and **in that** the fluidic subsystem (E50) of a module contains one or several fluidic connection means (E51) allowing connection of two fluidic subsystems of adjacent modules.

10. The method according to claims 8 or 9, **characterized in that** the technical elements necessary for the operation of the electrical (E1), electronic (E2), computer (E3), aeraulic (E4) and fluidic (E5) systems are distributed over several modules during the manufacture of said modules in a production unit.
